# EUROPEAN PATENT APPLICATION

(11) **EP 4 372 386 A1**
(43) Date of publication of application: **22.05.2024**
(21) Application number: 22208389.1
(22) Date of filing: 18.11.2022
(51) Int. Cl.: G01P 1/02, B06B 1/00, G01C 19/5783, G01D 11/24, G01L 1/16, G01L 1/22, G01P 15/00

(54) **SENSOR MODULE AND METHOD FOR MANUFACTURING A SENSOR MODULE**

(71) Applicant: Sensirion AG, 8712 Stäfa (CH)
(72) Inventor: Camenzind, Marc Andre, 6438 Ibach (CH); Nufer, Sebastian, 8057 Zurich (CH); Mrcarica, Zeljko, 8049 Zürich (CH); Keitel, Robert, 8050 Zürich (CH)
(74) Representative: E. Blum & Co. AG

(57) **Abstract**

Sensor modules (10) and a method for manufacturing such sensor modules (10) providing a set of motion sensors (1) for manufacturing sensor modules (10) from and providing a continuous metal core printed circuit board (2,3,4) comprising a printed circuit board (2) supported by a core (3), and wiring (Wi) for each of the sensor modules (10) to be manufactured, each wiring (Wi) residing in a module area (MAi) representing an area of the metal core printed circuit board (2,3,4) assigned to one sensor module (10),

comprising further steps of:

a) partly separating adjacent module areas (MAi) from each other leaving one or more bridges (Bi) between adjacent module areas (MAi) in one or more of the printed circuit board (2) and the core (3),

b) arranging on and electrically connecting the motion sensors (1) to the printed circuit board (2), and

c) fully separating adjacent module areas (MAi) from each other thereby generating separated sensor modules (10).

## Description

### Technical Field

The present invention relates to a sensor module, to a sensor arrangement, and to a method for manufacturing a sensor module.

### Background Art

A motion sensor such as an accelerometer is to be firmly attached to a housing of a sensor module it is built in. Any loosening in the attachment may negatively affect sensitivity and frequency response.

The manufacturing of such a sensor module is performed by a step-by-step processing of each individual sensor module. Accordingly, every single motion sensor is to be placed into position on a substrate, for example, then is to be measured, processed, and post-checked. This arrangement then is to be packed into a separately manufactured housing and mechanically connected thereto in an assembly process. This approach of module-by-module manufacturing is time intensive as alignment and processing steps are to be repeated for every individual sensor module.

In case a motion sensor is represented by a semiconductor chip such motion sensor may be placed on a lead-frame and be encapsulated by a molded package. However, such package may not be stiff enough to be directly attached to a component to measure the motion of. In addition, the packaged motion sensor requires electrical connection to the outside world as well as mechanical protection which is difficult to achieve when directly being mounted to the component. A typical means to achieve electrical connectivity is to mount the motion sensor onto a printed circuit board. However, the printed circuit board again requires mechanical protection and a stiff transmitter to couple the motion sensor to the component. Again, a stiff housing in form of a box is required, e.g. made from metal, into which housing the printed circuit board is to be firmly attached in an assembly process step, for instance in a screwing or gluing step. Even if the packaging of the motion sensor chip on the lead frame may be conducted as a batch process, i.e. many packaged motion sensors are simultaneously manufactured on a common lead-frame structure, neither the mounting of the packaged motion sensor on the printed circuit board, nor the assembly of the printed circuit board into the individual housing is a batch process that can be performed simultaneously for a multitude of sensor modules. I.e., the housing production batch does not match the PCB production batch in processing. The housing and the printed circuit board including the mounted motion sensor are manufactured separately before merging them in an assembly process at the end of the process flow.

This way of manufacturing is not very efficient and requires many alignment and processing steps.

### Disclosure of the Invention

The problem to be solved by the present invention is therefore to provide a method for manufacturing a sensor module that is more efficient than the above conventional manufacturing method. At the same time, it is desired to provide a sensor module that is capable of being mounted to a component, which sensor module allows for a sufficient coupling to the component for properly receiving the motions to be sensed.

The problem related to the method is solved by the method according to claim 12. In the method for manufacturing sensor modules, a set of x **motion sensors** is provided for manufacturing y sensor modules from, with y ≥ 2 and x ≥ y. Preferably, the motion sensor is one of a strain sensor, an acoustic emission sensor, an acceleration sensor and a gyroscope, and hence configured to sense a motion of a component. The motion sensor can be embodied as a motion sensor chip without any package or lead-frame. Such bare die motion sensor may later on be mounted in a "chip-on-board-mount". Alternatively, the motion sensor can be represented by a motion sensor chip arranged on a substrate, or it can be represented by a motion sensor chip arranged on a lead-frame and packaged.

In addition, a continuous **metal core printed circuit board** is provided of a size to manufacture at least y sensor modules from. The metal core printed circuit board - in short MCPCB - comprises a printed circuit board - in short PCB - supported by a core made from metal. The core is also referred to as base in the following. Preferably, the PCB is arranged on top of the metal core rather than the core being enclosed by PCB layers. Given that a PCB typically comprises at least one, preferably two, dielectric layer/s, such as FR-4 layer/s, and at least one, preferably two, conducting layer/s for implementing circuitry, such as copper layer/s, it is understood that the base is not considered a layer of a standard PCB. Although the base is made from metal, such base is of different characteristic compared with a conducting layer of a PCB. In particular, the metal base is thicker compared with a conducting PCB layer such that it can perform the support function for the PCB.

Traditionally, MCPCBs are used as substrate for power electronics or LEDs wherein the base serves as heat sink. However, presently the mechanical properties of the base of such MCPCB are exploited rather than the heat dissipating properties. In the present application, the base preferably acts as a stiffener for the printed circuit board and allows the resulting sensor module to be mounted to a component to measure a motion of or within the component. Preferably, the resulting sensor module is mounted to the component by means of its base. This guarantees a good signal transmission from the component to the motion sensor on the printed circuit board. Hence, the base also acts as mechanical interface between the component to measure and the motion sensor. In one embodiment, the MCPCB may comprise mounting means such as drill holes for screws, or other fastening means for attaching the sensor module to the component to measure with the base facing and coupling to the component. A gel or wax may be provided between the MCPCB and the component in this embodiment. The accessible surface of the base itself may also act as mechanical interface, in case this large area is used to be mounted to the component, e.g. by means of an adhesive layer.

The MCPCB is of a planar extension such that its length and width in a horizontal plane exceeds its height in vertical direction orthogonal to the horizontal plane by a factor of at least 2, preferably at least 5. The MCPCB preferably is supplied as such to the entity performing the manufacturing of the sensor modules in form of a prefabricated component. For manufacturing a MCPCB, the manufacturing of the base can be integrated in the manufacturing of the printed circuit board. In a different embodiment, a standard PCB is attached to a base fabricated separate from the standard PCB, such as a metal plate. Preferably, the PCB is mounted to the base by means of an adhesive layer.

The horizontal extension of the MCPCB is dimensioned to manufacture many, i.e. at least two, preferably more than ten, preferably more than hundred sensor modules in **batch processing.** A batch presently is considered a number of items to be manufactured. Batch processing or manufacturing represents manufacturing a number of identical items, presently sensor modules, simultaneously rather than one at a time. Batch processing preferably is characterized in that the entire process steps are applied to the batch of items, preferably simultaneously, such that the next process step can only be applied once the previous process step has terminated for all the items of the batch.

Accordingly, the MCPCB dimensioned to manufacture many sensor modules from is the starting point. In doing so, alignment steps e.g. in mounting the motion sensors and / or other electrical components for many sensor modules do only need to be performed once for the entire combination rather than for every sensor module. This is also true for testing and / or calibrating the sensor modules. As will be illustrated below, testing and / or calibrating may be achieved efficiently in the batch, i.e. when the sensor modules still are at least partially mechanically linked.

The PCB of the MCPCB comprises wiring for each of the y sensor modules to be manufactured. Each wiring resides in a module area of the MCPCB representing an area of the MCPCB assigned to a sensor module. In one embodiment, the module area is of square or rectangular shape leading to an array of module areas, each comprising associate wiring. The partial and the full separation steps to be introduced later on are applied between the module areas. Adjacent module areas may be separated from each other by a dicing street, i.e. an area the separation tool consumes during dicing. Preferably, the PCB of the MCPCB further comprises at least one die pad per module area for attaching one of the x motion sensors to.

In a first step, adjacent sensor areas are partly separated from each other leaving one or more bridges between adjacent sensor modules in one or more of the PCB and the base. In a further step, the x motion sensors are arranged on and electrically connected to the PCB. Preferably, the x motion sensors are mounted on die pads and are electrically connected to contact pads of the PCB. The mounting between the die pad and the motion sensor may include an adhesive. In a different embodiment, the arrangement of a motion sensor on the PCB shall also include its bare electrical connection to the PCB, while the motion sensor may directly sit on the base, e.g. in a recess in the PCB which recess grants access to a top side of the base.

Finally, the individual adjacent module areas are fully separated from each other thereby generating separate, individual sensor modules. Further steps if any may be applied to the individual sensor modules, such as attaching a cap.

Given that in the present application of motion sensing the base is considered as at least part of the housing and the MCPCB is provided as a uniform, continuous sheet for manufacturing many sensor modules from, the housing represented by the base and the PCB are integrated into a batch manufacturing process. As a result, the PCB and the base do not need to be combined at the end of the process flow, i.e. after mounting at least the motion sensors, but the base as part of the housing is directly attached to the PCB early on, in particular prior to mounting the motion sensors and / or other electrical components. The base represents an element of a housing that is responsible for a proper coupling of the motion sensor to the component and for protecting of the motion sensor. In addition, the MCPCB represents the platform for batch manufacturing the multiple sensor modules in common processing steps given that the MCPCB serves as the mechanical basis for supporting the individual modules in multiple manufacturing stages. Hence, the MCPCB serves as frame after the partial separation step, in which frame partly or fully functional sensor modules are connected to each other and / or to the frame.

The **separation** step, also known as singulation in wafer processing, is performed in two steps: At one time during the manufacturing process, the sensor modules are partly separated from each other, at least leaving bridges between adjacent individual sensor modules. Given that the partial separation of the sensor modules is implemented by one or more of routing, laser cutting, snapping, milling dicing, cutting and stamping, dirt and dust may be generated affecting the motion sensors and possibly other electrical components if already mounted to the PCB. Accordingly, it is preferred that the partial separation is performed at a time the PCB is not yet populated with the motion sensors and / or other electrical components. Hence it is preferred that the PCB only is populated, e.g. by SMD mounting, after the MCPCB is partly separated.

The partial separation is performed between module areas of the MCPCB. The partial separation of adjacent module areas preferably leaves one or more bridges between such adjacent module areas. The one or more bridges may remain in either the PCB, or in the base, or, most preferably, in both, i.e. in the entire MCPCB. These bridges can vary in number, e.g. between 1 and 1000, and can vary in in width, e.g. between 100um and 10cm. Each bridge preferably includes a stack of the functional metal material of the base at the bottom, material of the PCB on the top, and an adhesive layer between the PCB material and the functional material that fixes the base to the PCB. In another embodiment, the bridge consists only the PCB material. In a further embodiment, the bridge only consists of the functional material.

After the partial separation step, the x motion sensors and possibly other electrical and/or electronic components are mounted on a top / first side of the PCB. The mounting can be performed by SMD mounting or other mounting and / or soldering processes in order to mechanically attach the sensors to the PCB and electrically connect the motion sensors and possible other electrical components to the wiring. Even if the mounting of the sensors and / or components is not performed simultaneously for all module areas but sequentially, only one alignment step is required between the MCPCB and a mounting tool in view of the present batch processing. In traditional processing instead, the PCB and the mounting tool need to be aligned for each individual sensor module.

The full separation of the sensor modules from each other is performed after all mounting and possible testing steps. In the full separation step, any bridges remaining after the partial separation step are removed, again, preferably by means of a cutting tool along the dicing streets between the adjacent sensor modules, or by means of one or more of routing, laser cutting, snapping, milling, etc. At the end, the individual sensor modules including the MCPCB, now of module area size, the motion sensor and the electronics are singulated in the end using a singulation technology, such as introduced above for the partial singulation.

After the above mounting step and before the full separation step, it is preferred that the sensor modules are electrically tested and / or calibrated, preferably all sensor modules simultaneously. For doing so, it is preferred that the bridges include at least printed circuit board material given that at least one of the bridges manufactured between adjacent module areas of a common row or of a common column includes at least one bridge wire connecting the wirings of the adjacent module areas. During testing and / or calibrating, the at least one bridge wire between adjacent motion sensor areas can be used to electrically connect the adjacent sensor modules serially. For example, voltage / current may only be applied to corresponding contact pads at a side of the MCPCB, and may be supplied via the wired bridges to all the sensor modules of a common row or column. Further processing steps are also possible on batch level before complete singulation, for instance one or more of full mounting, marking, etc.

Preferably, the base is made of a robust material such as aluminium that can be used as at least part of a housing and as a coupling element to the component to measure. Using an MCPCB allows the usage of batch processes during manufacturing. Many steps in manufacturing can be performed in the same setting over multiple sensor modules at the same time. Providing the MCPCB results in a uniform manufacturing for all sensor modules of the batch in which the setup is performed only once, whereas the manufacturing of individual non-batched sensor modules would result in variations amongst them, because the setup for the manufacturing needs to be performed for every sensor module. Manufacturing time is decreased in view of the setup being performed only once for multiple sensor modules on panel level, whereas individual devices would require more manufacturing time due to the multiple setups. In the present batch manufacturing, precision is higher for placing components on the PCB as multiple sensor modules are aligned at the same time when still mechanically robustly connected. Individual sensor modules would need to be aligned every time and precision is lost, as every process has tolerances. The housing and the PCB are presently part of an entire assembly process, they are not combined anymore at the end of the process flow, but the housing is directly integrated in the manufacturing from the beginning.

The advantage of such batch processing is its efficiency, as alignment and processing is done on multiple devices in one processing step, and the quality of the individual sensor modules after singulation. All the processes during manufacturing are preferably done in the same setting over multiple sensor modules at the same time.

Being able to possibly buy an already processed MCPCB and do batch processes on this MCPCB reduces manufacturing time and costs.

In a preferred embodiment, after arranging the motion sensors and possibly other electrical components on the MCPCB, a cap structure of a size to manufacture y sensor modules from may be arranged and / or attached on / to the PCB. In the final separation step, the cap structure is diced, too. As a result, each individual sensor module is capped. The cap and the MCPCB define a protected cavity for the motion sensor and possibly other electrical components. The base and the cap complete a housing for the PCB and the sensor module.

The problem is also solved by a sensor module according to claim 1. The sensor module comprises a metal core printed circuit board preferably comprising a PCB supported by a metal base. The sensor module further comprises a motion sensor arranged on and electrically connected to the PCB of the MCPCB. The base enables a sufficient coupling to a component to measure. At the same time, the base has served as common platform in the batch fabrication of multiple sensor modules.

Preferably, the base serves a stiffening function for stiffening the PCB, which PCB on its own is considered to be too soft for effecting a sufficient coupling between the sensor module and the component. In this regard, it is preferred that a stiffness of the base exceeds a stiffness of the printed circuit board, preferably by a factor of at least 2, preferably by a factor of at least 5. The stiffness represents one or both of the horizontal stiffness in the plane of the printed circuit board and base and the vertical stiffness orthogonal to the plane of the printed circuit board and base.

Preferably, the base has an elastic modulus exceeding an elastic modulus of the printed circuit board, preferably by a factor of at least 2, preferably by a factor of at least 5. Preferably, the elastic modulus of the base is above 20 GPa, preferably above 40 GPa, preferably above 65 GPa.

Preferably, the base has a thickness exceeding a thickness of the printed circuit board, preferably by a factor of at least 1.5, preferably by a factor of at least 2.0. Preferably a thickness of the base is between 0.2 mm and 5 mm, most preferably between 1 mm and 2 mm.

The base is made from metal, preferably from aluminium such that the MCPCB is an aluminium core printed circuit board (AlMCPCB). In another embodiment, the base is made from copper or from an iron alloy.

The base preferably is mounted to a dielectric layer of the PCB, or to another dielectric layer sandwiched between the PCB and the base. In case of commercially available metal core printed circuit boards, such dielectric layer preferably is made from a material with a high thermal conductivity, such as 0.25 W/(m*K) or more in view of the original heat conducting function of the metal core printed circuit board.

In case of the PCB being a standard PCB including FR-4 material as dielectric layer/s, the PCB comprises at least one, preferably more than one, preferably two, dielectric layers, preferably made from FR-4, and at least one, preferably more than one, preferably two, copper layers separating the dielectric layers for implementing circuitry.

Preferably, at least one of the front end surfaces of the MCPCB of the individual sensor module comprises areas of different textures. The one or more front ends showing the different textures are typically the front end/s that was/were linked to adjacent sensor modules during the process of batch manufacturing. A first area with a first texture is cut during the partial separation step of the manufacturing method as laid out above. A second area with a second texture is cut during the full separation step of the manufacturing method as laid out above, i.e. when the bridges remaining from the partial separation step are finally removed. Texture may include one or more of grain size of the material on the surface of the front end, a pattern of the surface, a protrusion of the surface with respect to other areas, a haptic sensation of the surface, and / or others.

In a preferred embodiment, the motion sensor is a strain sensor chip comprising a semiconductor substrate and a strain sensing layer of polycrystalline piezoelectric material supported by the substrate. The strain sensing layer extends in a plane in parallel to a plane of the substrate, and is arranged between a top electrode and a bottom electrode, each extending in parallel to the plane of the substrate. The strain sensing layer preferably has a thickness of less than or equal to 2 µm perpendicular to its plane extension. It is linked with the substrate to have strain in the plane of the substrate couple into the strain sensing layer as in-plane strain, wherein the polycrystalline piezoelectric material is configured to convert the in-plane strain in the strain sensing layer into an electric field perpendicular to the plane of the strain sensing layer, resulting in a difference of potential between the top electrode and the bottom electrode representing a strain signal.

In such embodiment, strain represents one of compression or stretching in a body and typically varies over time in case it is generated by vibrations and / or structure borne sound. Strain, hence, is dynamic strain, preferably oscillating strain. Strain may be coupled from a component - the strain of which is to be measured - into the strain sensor and hence into the strain sensing layer. Presently, strain is considered as in-plane strain, i.e. as strain in an x/y plane that is desired to be measured. Any vibration or other oscillation in z-direction desired to be measured effects in-plane strain in x/y direction due to the Poisson effect. For this purpose, a polycrystalline piezoelectric material is used for a strain sensing layer that is configured to convert strain in a plane of the strain sensing layer, also referred to as in-plane strain, into an electric field perpendicular to the plane of the strain sensing layer. An electrical strain signal results from a charge transfer in the polycrystalline piezoelectric material upon impact of the mechanical in-plane strain. The resulting charge Q leads, in combination with a capacity C of the piezoelectric material, to a voltage signal ΔV=ΔQ/C, i.e. a difference of electric potential between the top electrode and the bottom electrode representing the strain signal.

Accordingly, strain in the horizontal x/y plane in the substrate is coupled into the strain sensing layer as strain in its x/y plane. The coupling manifests in the in-plane strain on the top surface of the substrate being received by the bottom surface of strain sensing layer. Hence, a surface deformation of the substrate representing the strain is transmitted into the strain sensing layer. This is achieved by a rigid connection between the substrate and the strain sensing layer. For this reason, the strain sensing layer preferably is deposited directly on the substrate or on the bottom electrode, which in turn is deposited on the substrate. However, other layers may be deposited in between as long as the coupling is sufficient. Given that in-plane strain in the substrate shall transfer to the strain sensing layer, the strain sensing layer as well as the electrodes for measuring a significant signal are desired to extend across a considerable area such as indicated above.

In operation, it is preferred that the sensor module containing the strain sensor is attached to or otherwise linked to a component the strain, or structure borne sound, or orthogonal vibrations / deflections are desired to be measured. The combination of the sensor module and the component the sensor module is attached to, preferably via its base, is referred to as sensor arrangement. Accordingly, the sensor module is coupled via its base to the component to preferably receive in-plane strain there from, which in-plane strain is defined as strain in the x/y plane. Other than such coupling, it is preferred that the sensor module is free floating such that a vertical movement of the sensor module and particular its strain sensing and strain sensing layer is not inhibited, while at the same time the vertical movement of the strain sensing layer strictly follows the vertical movement of the substrate and the vertical movement of the component by way of rigidly linking the strain sensing layer to the substrate and rigidly linking the strain sensor to the component. In other words, the strain sensor follows any deflection of the component in vertical z-direction, the deflection not being inhibited by a mechanical stop. This ensures, that the strain measured is not a result of a vertical compression of the strain sensing layer, but is a result of in-plane strain, and preferably dynamic in-plane strain.

Strain in the plane of the substrate and the strain sensing layer may be positive or negative, i.e. either tensile or compressive. The polycrystalline piezoelectric material of the strain sensor has the effect to generate electric dipoles in response to in-plane stretching or compression of the material. Accordingly, the strain in the plane of the strain sensing layer is at least in part converted to an electric field perpendicular to the plane. The property of the perpendicular relation between in-plane strain and perpendicular electric charge within the strain sensing layer is quantified by the piezoelectric coefficient e₃₁. In addition, a longitudinal piezoelectric effect with coefficient e₃₃ may occur in the strain sensing layer, i.e. electric field in direction of strain, both of which perpendicular to the strain sensing plane. These properties are primarily affected by the choice of material and the thickness of the strain sensing layer. The different piezoelectric coefficients are further coupled to different geometrical-mechanical factors of the strain sensing layer and its boundaries, and hence constitute a sensing signal. Notably, even if material coefficient e₃₁ may not dominate over coefficient e₃₃ it is possible to construct a sensor predominantly sensing in-plane strain. This can be achieved by an adequate choice of material, thickness and geometry of the strain sensing layers and adjacent structures.

The crystalline structure of some polycrystalline piezoelectric materials enables such perpendicular coupling, even without applying an external electrical field. In such material, crystallites may have different orientations, however, the overall piezoelectric coefficient e₃₁ still is of sufficient magnitude for a perpendicular coupling. Preferably, many of the crystallites have the same orientation. Preferably, the crystallites of the polycrystalline material of the strain sensing layer show columnar shapes, and preferably a majority of such crystallites extend with their main axis in z-direction. Accordingly, a majority of the crystallites are preferably arranged columnar, preferably in z-direction perpendicular to the plane of the substrate.

In addition or alternatively, the polycrystalline piezoelectric material is prepared and arranged such that it comprises crystallites with a c-axis oriented perpendicular to the plane of the substrate. Preferably a majority of crystallites of the polycrystalline piezoelectric material show a c-axis oriented perpendicular to the plane of the substrate. AlN films prepared on a metal electrode with a face centered cubic lattice structure show a high c-axis orientation. Preferably, each of the top electrode and the bottom electrode comprises or consists of molybdenum.

With respect to the present sensor module arrangement, in-plane strain of a component to be measured occurs as in-plain strain at its top surface to which the sensor module preferably is attached to. Hence, the in-plane strain in the component will be coupled to in-plane strain in the base, from there to in-plane strain of the PCB, from there to in-plane strain of the substrate of the strain sensor chip, and finally to in-plane strain in the strain sensing layer. The in-plane strain in the component may result from compression or tension forces acting onto the component in the plane. It is to be said, that even strain in perpendicular direction to the plane may generate a strain component in-plane given that any stretching or compression of the component in perpendicular direction comes along with a respective in-plane compression or stretching. Accordingly, also vibrations of the component in z-direction may equally be sensed by the strain sensor arrangement as dynamic in-plane strain as suggested.

By measuring strain in x/y direction rather than accelerations in z-direction, it was also found that the present strain sensor is capable of measuring vibration induced strain at frequencies substantially higher than in conventional vibration sensors that focus on the direct detection of accelerations along the z-axis. Conventional vibration sensors typically cannot sense vibration frequencies beyond 25 kHz due to the inertia of the seismic mass and / or the inertia of the sensing element deflecting in z-direction. In contrast, the present strain sensor senses changes in the strain beyond this limit, and in particular up to several 100 kHz, preferably up to 500 kHz, owing to the concept of sensing in-plane strain in and by a non-deflecting strain sensing layer rather sensing motions of a deflecting strain sensing layer. Accordingly, this advantage of the present strain sensor allows for new applications in high-frequency vibrations sensing.

The component may be, or may be coupled to one of a machine, a tool, a production site, an infrastructure, an engine, a pump, a turbine, a bearing, a housing, a gear, a transportation means, and a vehicle, without limitation. Infrastructure may include, for example, a bridge, a power plant, or a wind engine. Transportation means may include transportation means for humans, including for example, a train, an underground, or for objects, including, for example, a baggage claim system, a sorting system, e.g. used for sorting mail, a filling line, etc. Given these components or systems are mechanical systems preferably being actuated, e.g. being translatory or rotatory actuated, or containing translatory or rotatory actuated elements coupled with the component, these systems and / or components thereof undergo mechanical stress e.g. caused by vibrations.

In turn, the magnitude of or pattern in the strain sensor signal representing such mechanical stress can be an identifier for the condition and / or the quality of such component or system. Accordingly, it is preferred that not only is the strain measured in such sensor module arrangement, but also is the strain sensor signal evaluated, preferably by applying algorithms executed by a processing unit, for monitoring the condition and / or quality of the component or the system. For example, a magnitude and / or frequency of an oscillating strain sensor signal may be derived for classifying a condition or quality of the component, for example. For identifying the condition and / or quality, one or more measurements may need to be taken and evaluated. For example, a current measurement may allow determination of the condition or quality in some systems, while in other systems, multiple measurements may need to be taken over time, e.g. over a couple of hours or days, in order to allow for identifying a condition or quality of such component or system.

The present sensor module can also be used for measuring structure borne sound and / or noise. In such application, the signal of the strain sensor may indicate a measure of quality of the monitored component, or of the monitored object the component is coupled to. For example, by mounting the strain sensor on a vehicle road noise can be measured and the condition of the road can be monitored by evaluating the measured structure borne sound of the vehicle. Possibly, active noise cancellation may be controlled in the vehicle dependent on the signal of the sensor module. The component may also include a bridge or a building or other construction propagating structure borne sound. The signal of the strain sensor can then be taken as an indicator of the quality of living in or near such construction.

In the same manner the sensor module can be mounted to a transportation means such as a container for measuring the structure borne sound during transportation of the container. This enables monitoring the condition of rails, tracks or other guide means the container is driven on. In a different application, the sensor module may be applied to a component including one of a boiler, a heater and a burner, also for measuring structure borne sound. In these examples, the measured structure borne sound may represent a state of the component and be used for controlling the component or the system the component is part of.

The sensor module may also be applied to a living being, such as a human being, for measuring structure borne sound and / or noise that may propagated e.g. in bones of the living being. The measured strain sensor signal may be used to implementing a hearing aid function and / or a noise cancellation function for the living being.

### Brief Description of the Drawings

The invention will be better understood and objects other than those set forth above will become apparent from the following detailed description thereof. Such description makes reference to the annexed drawings, wherein:
Figure 1 illustrates a side cut view of a schematic sensor module arrangement, according to an embodiment of the present invention,
Figure 2 illustrates a cut-out of a sensor module in side view, according to an embodiment of the present invention,
Figure 3 illustrates a motion sensor in a cut view, according to an embodiment of the present invention,
Figures 4 to 7 illustrate top views on a PCB during manufacturing according to an embodiment of the present invention, and
Figure 8 illustrates a top view on a PCB during manufacturing according to an embodiment of the present invention.

### Detailed Description of the Drawings

Same reference signs across the Figures refer to same elements.

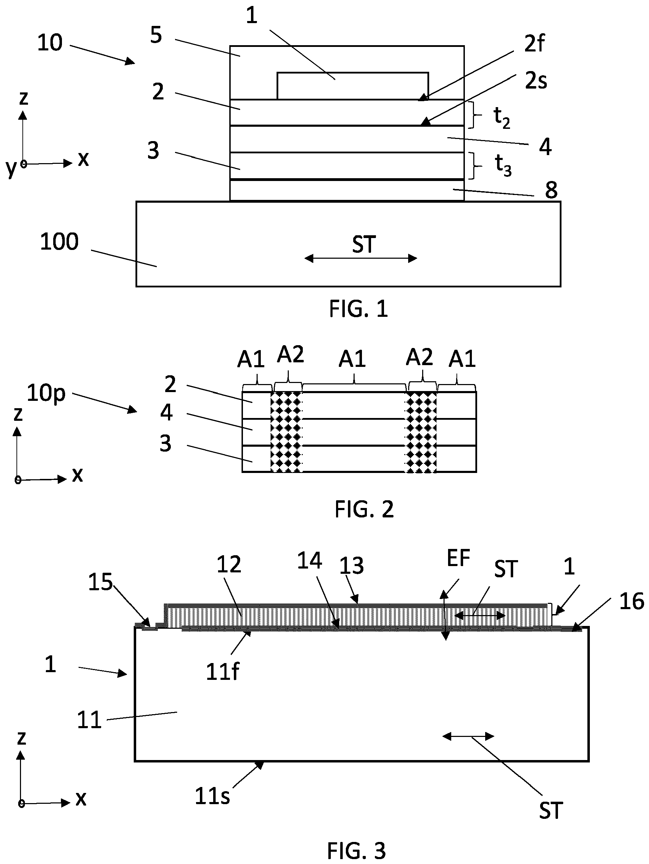

Figure 1 illustrates a cut view of a schematic sensor module arrangement according to an embodiment of the present invention. The sensor module arrangement comprises a sensor module 10 attached to a component 100. The sensor module 10 comprises a motion sensor 1, e.g. a strain sensor, as is shown in Figure 3. The component 100 is exposed to dynamic strain ST in direction of the double arrow, i.e. in x- / y- direction, also referred to as in-plane strain, but not limited to. It is desired to measure the strain ST of the component 100 by means of the sensor module 10.

The sensor module 10 comprises a metal core printed circuit board 2,3,4 also referred to as MCPCB. The MCPCB 2,3,4 of planar extension in x- and y-direction comprises a printed circuit board 2 - in the following PCB -, with a first side 2f and a second side 2s opposite the first side 2f. The motion sensor 1 is attached to the first side 2f of the PCB 2, preferably by means of gluing and / or soldering. Preferably, the motion sensor 1 is placed on a die pad of the PCB 2 (not shown), which die pad may be embodied as conductive area on the first side 2f of the PCB 2. The PCB 2 is mounted with its second side 2s to a base 3, preferably by means of an adhesive layer 4. PCB 2, adhesive layer 4 and base 3 are preferably of the same size in the x- / y-plane.

Preferably, the sensor module 10 is attached to the component 100 via the bottom surface of its base 3 by means of an adhesive layer 8. Accordingly, the base 3 represents the mechanical interface between the motion sensor 1 and the component 100.

The sensor module 10 is covered by a cap 5. The cap 5 protects the motion sensor 1 and other electrical components possibly arranged on the first side 2f of the PCB 2, but not shown. For example, signal processing may also be implemented in the sensor module 10, either even within a chip of the motion sensor 1, or by dedicated chips or other electrical components also residing on the PCB 2.

In case of in-plane strain ST in the horizontal plane x,y of the component 100, it propagates through the base 3 at the same time serving as housing component via the PCB 2 to the motion sensor 1, including any intermediate layers such as adhesive layer 4, etc..

The present motion sensor 1 preferably is a strain sensor embodied as a strain sensor chip. An example of a strain sensor chip is illustrated in Figure 3. It comprises a substrate 11, e.g. a semiconductor substrate, preferably a silicon substrate, with a first side 11f and a second side 11s opposite the first side 11f. A sensor stack 12/13/14 is arranged on top of the substrate 1, i.e. on its first side 11f. The sensor stack 12/13/14 comprises a strain sensing layer 12 which is sandwiched between a top electrode 13 and a bottom electrode 14. The strain sensing layer 12 presently is made from the piezoelectric material aluminium nitride AlN in a polycrystalline structure. Given that the substrate 1 has a planar extension in x,y direction, the strain sensing layer 12 has so, too. I.e. its thickness in z-direction is much smaller than its planar extensions in x- and y-direction. The material of the strain sensing layer 12 is configured such that strain ST in the lateral plane x,y, which is indicated by a double arrow, is converted into an electrical field EF perpendicular to the x,y plane, i.e. in z-direction. Accordingly, a difference in electrical potential can be monitored at the top and the bottom electrode 13, 14.

Returning to Figure 1, the strain ST in the horizontal plane x,y of the component 100 may, in one embodiment, not necessarily result from compression or tension forces directly acting on the component 100 in x/y direction. The component 100 may, for example, vibrate or oscillate in vertical direction, such that vertical dynamic strain is generated as a result from the vibration. In view of the Poisson effect, this vertical strain also effects a corresponding horizontal dynamic strain ST in the x/y-plane, which is the strain ST presently measured by the sensor module 10. Since there is no mechanical stop or any other means that allows the vertical strain directly to indirectly act on the strain sensing layer 12, it is indeed the in-plane strain in x/y direction that is measured by the present strain sensing layer 12.

In view of the desired coupling of strain ST from the component into the motion sensor 1, it is preferred that the base 3 of the sensor module 10 shows a stiffness exceeding the stiffness of the PCB 2.

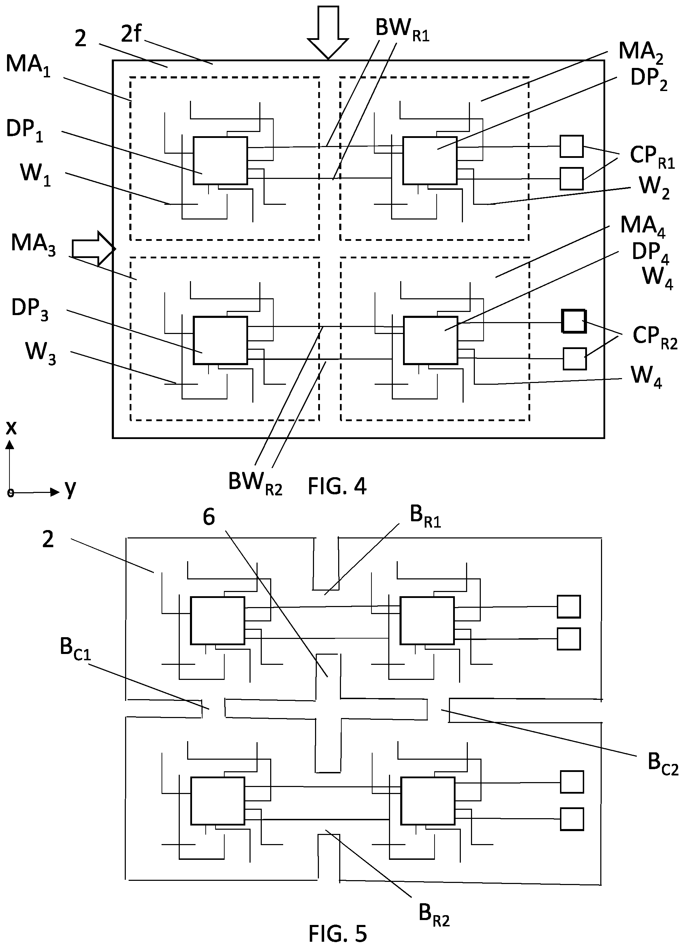

Figures 4 to 7 illustrate top views on a continuous MCPCB, only the PCB 2 of which is visible, during various manufacturing states, according to an embodiment of a method for manufacturing sensor modules.

Figure 4 illustrates a top view on a PCB 2 of an MCPCB, which PCB is a continuous PCB 2 of a size to manufacture multiple sensor modules from. Presently, the number of sensor modules to be manufactured from the PCB 2 is four. However, another number of sensor modules may be manufactured in a batch on the common PCB 2, e.g. tens of even hundreds of sensor modules. The present PCB 2 is already mounted to a base, which base is underneath the PCB 2 in direction of the plane of paper, and hence not visible in Figure 4.

In Figure 4, four areas are indicated by dashed rectangles, each representing a module area MAᵢ of the MCPCB that later on will represent the MCPCB area of an individual sensor module. The rectangular module areas are referred to by MA₁ to MA₄ and contribute to an array of 2x2 module areas MAᵢ. The module areas MA₁ to MA₄ are defined by dicing streets between adjacent module areas MAᵢ which dicing streets are indicated by bold arrows.

The PCB 2 as shown in Figure 4 also comprises electrical wiring W₁ to W₄. Typically, prior to the mounting of motion sensors and / or electrical and / or electronic components, the PCB 2 is prepared with customized wiring patterns. Presently, the PCB 2 contains four wirings W₁ to W₄, one in each module area MAᵢ which later on will constitute the wirings Wᵢ of the individual sensor modules. Although the wirings Wᵢ of Figure 4 appear to be on the top surface of the PCB, it shall be understood that the wiring Wᵢ may be implemented in any metallization layer within the PCB 2 as desired. The wirings Wᵢ, per module area MAᵢ, comprise conductor traces to electrically connect the motion sensor and other electrical components yet to be placed on the PCB 2.

Typically, a wiring Wᵢ is limited to the corresponding module area MAᵢ. However, in the present example, so called bridge wires BW_{R1} and BW_{R2} are implemented that interconnect the wirings Wᵢ of adjacent modules areas MAᵢ. Such bridge wires BW_{R1} and BW_{R2} presently interconnect the wirings Wᵢ of module areas MAᵢ of a common row. In addition, one die pad DPᵢ is provided per module area MA₁, which die pad DPᵢ is represented by a metallized pad on the top surface of the PCB 2, i.e. on its first side 2f. A die pad DPᵢ is a metallized area for placing a die, i.e. a chip on, presently for placing the motion sensor semiconductor chip on. Other die pads may be provided, e.g. for placing other motion sensors and / or other electric or electronic components on, such as a processor.

On the right hand side of the PCB 2 contact pads CP_{R1} and CP_{R2} are provided, again in form of metallized pads on the top surface of the PCB 2. The contact pads CP_{R1} and CP_{R2} are electrically connected with the wirings Wᵢ of adjacent module areas MA₂ and MA₃. The function of these contact pads CP_{Ri} will be explained below.

Figure 5 illustrates a subsequent manufacturing step of the MCPCB of Figure 4. Most of the reference signs are omitted for clarity purposes. As already indicated by the bold arrows in Figure 4, the sensor module areas MAᵢ now are partly separated from each other. Accordingly, gaps 6 are produced between adjacent sensor modules areas MAᵢ and only bridges B_{Ri} and B_{Ci} are left for linking individual sensor modules. In particular, bridge B_{C1} links the sensor modules of the first column of the array, bridge B_{C2} links the sensor modules of the second column, bridge B_{R1} links the sensor modules of the first row, and bridge B_{R2} links the sensor modules of the second row. As can be derived from Figure 5, the horizontal bridges B_{R1/R2} for linking the sensor modules of the first and the second row are located such that the bridge wiring BW_{R1/R2} remains intact and is not cut.

The separation is performed through both the PCB 2 and the base 3, such that the gaps 6 between the individual sensor modules reach through the entire stack of the MCPCB.

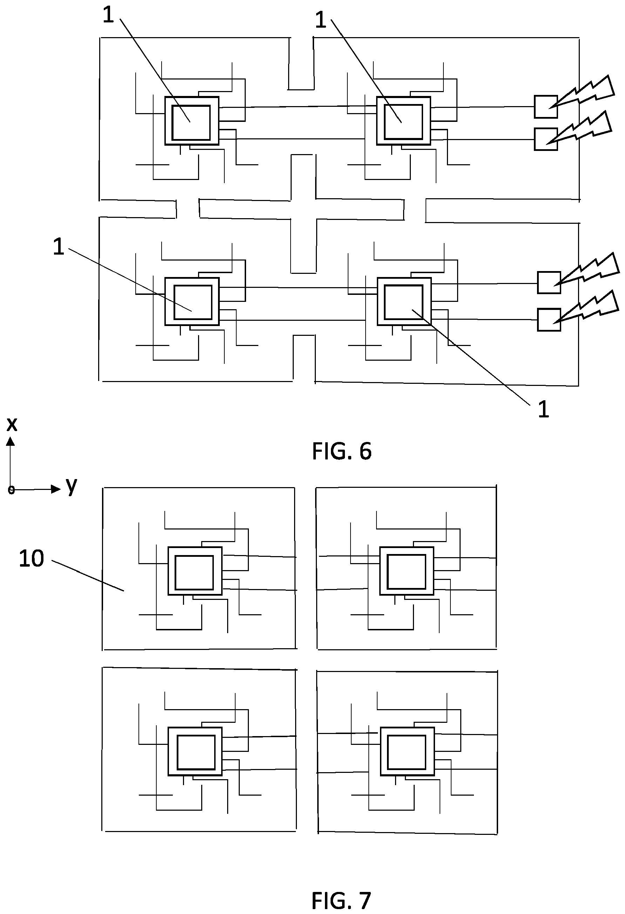

Figure 6 illustrates a subsequent manufacturing state of the MCPCB of Figure 5. First, the motion sensors 1 and possibly other electrical components are mounted to the PCB 2 for all sensor modules. This can be achieved by SMD mounting, for example. The components including the motion sensors 1 can be mounted simultaneously, or can be mounted sequentially, or can be mounted simultaneously per sensor module. This depends on the setting of the insertion machine.

In a second step, the electrical functionality of the individual sensor modules that still are linked via the bridges, is tested. For this purpose, a voltage may be applied to the contact pads CP_{Ri} for testing the sensor modules. By way of the bridge wires BW_{Ri}, sensor modules of the same row may be tested simultaneously. Other contact pads may be provided for providing test results. In a possible next step, the sensor modules may be calibrated, still while being linked via the bridge wires BW_{Ri}. Testing and calibration shall be indicated by the flashes close to the contact pads CP_{Ri}.

After testing according to Figure 6, the sensor modules may be fully separated from each other, as is shown in Figure 7. This means that the bridges B_{R1/R2/C1/C2} are cut or diced or punched or otherwise separated. In the present example, also the right-hand side of the MCPCB including the contact pads CP_{Ri} is cut off. This results in four individual sensor modules separate from each other but manufactured in a batch process.

Figure 2 illustrates a view on a side of a sensor module, preferably only its MCPCB 2,3,4, which side is also referred to as front end. Side surfaces of the PCB 2, the adhesion layer 4, and the base 3 are visible. This front end represents the front end of a sensor module which comprised a bridge Bᵢ to an adjacent sensor module during batch manufacturing. It can be seen, that the front end of the MCPCB 2,3,4 shows areas A1 and A2 of different textures. Areas A1 represent areas cut by a cutting tool during partial separation. Areas A2 represent bridges cut off by a cutting tool during full separation. It can be seen, that the textures of the areas A1 and A2 are different, either since different cutting tools are used for the respective separation steps, or since the cutting of the bridges may be slightly be offset / protruding in y-direction from the cut surface resulting partial cutting. Then, the texture may represent a slight protrusion in area A2 with respect to area A1.

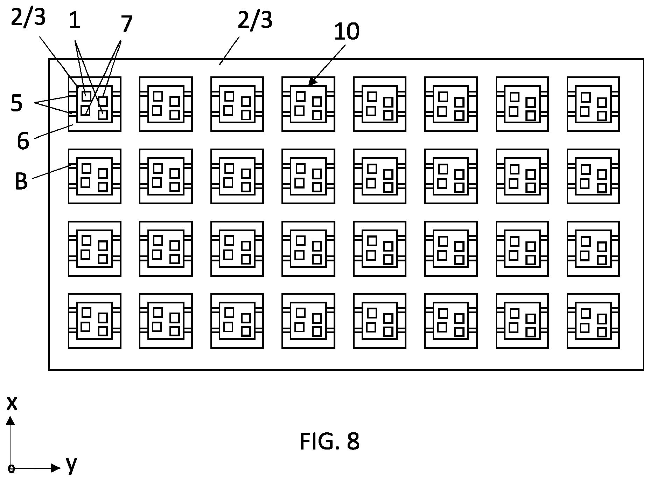

Figure 8 illustrates a top view on a MCPCB during manufacturing, according to an embodiment of the present invention. The state of manufacturing corresponds to the state shown in Figure 6, i.e. after partial separation and after mounting motion sensors 1 and other electrical components 7, and prior to complete separation of the sensor modules, however, now with 4x8 sensor modules. Only the PCB 2 can be seen from the MCPCB given the top view. Gaps 6 are generated by partial separation of the sensor modules 10. Bridges B remain between the frame represented by the MCPCB and the sensor modules 10 after partial separation. Bridge wires are not illustrated although present.

### List of References

- 1: Motion Sensor
11 Substrate
12 Strain Sensing Layer
13 Top Electrode
14 Bottom Electrode
- 2: Printed Circuit Board
- 3: Base
- 4: Adhesive Layer
- 5: Cap
- 2,3,4: MCPCB
- 10: Sensor Module
- 100: Component

- Wᵢ: Wiring
- MAᵢ: Module Area
- DPᵢ: Die Pad
- CPᵢ: Contact Pad
- Bᵢ: Bridge
- BWᵢ: Bridge Wiring

- A1, A2: Areas

## Claims

1. Sensor module (10), comprising
- a metal core printed circuit board (2,3,4),
- a motion sensor (1) arranged on and electrically connected to the metal core printed circuit board (2,3,4).

2. Sensor module (1) according to claim 1,
wherein the metal core printed circuit board (2,3,4) comprises a printed circuit board (2) supported by a core (3) made from metal.

3. Sensor module (1) according to claim 2,
comprising an adhesive layer (8) attached to the core (3) for mounting the metal core printed circuit board (2,3,4) to a component (100) for measuring a motion of the component (100),
preferably wherein a thickness of the adhesive layer (8) is between 10 nm and 1 mm.

4. Sensor module (1) according to any of the preceding claims,
wherein the core (3) is a stiffening core configured to stiffen the printed circuit board (2),
preferably wherein a stiffness of the core (3) exceeds a stiffness of the printed circuit board (2), preferably wherein a stiffness of the core (3) exceeds a stiffness of the printed circuit board (2) by a factor of at least 2, preferably at least 5,
preferably wherein the stiffness is represented by one or both of a horizontal stiffness in a plane (x,y) of the printed circuit board (2) and the core (3) and a vertical (z) stiffness orthogonal to the plane (x,y) of the printed circuit board (2) and the core (3).

5. Sensor module (1) according to any of the preceding claims,
wherein the core (3) has an elastic modulus exceeding an elastic modulus of the printed circuit board (2),
preferably wherein the elastic modulus of the core (3) exceeds the elastic modulus of the printed circuit board (2) by a factor of at least 2, preferably at least 5,
preferably wherein the elastic modulus of the core (3) is above 20 GPa, preferably above 40 GPa, preferably above 65 GPa.

6. Sensor module (1) according to any of the preceding claims,
wherein the printed circuit board (2) comprises a dielectric layer facing the core (2) and at least one copper layer for implementing circuitry,
preferably wherein the dielectric layer has a thermal conductivity of 0.25 W/(m*K) or more,
preferably wherein the core (3) is attached to the dielectric layer of the printed circuit board (2) by means of an adhesive layer (4) extending all across the surfaces of the core (3) and the printed circuit board (2) facing each other,
preferably wherein the printed circuit board (2) comprises at least two dielectric layers, preferably made from FR-4, and at least two copper layers for implementing circuitry.

7. Sensor module (1) according to any of the preceding claims,
wherein the core (3) is made from aluminium.

8. Sensor module (1) according to any of the preceding claims,
wherein at least one of the front end surfaces of the printed circuit board (2) comprises areas (A1,A2) of different textures.

9. Sensor module (1) according to any of the preceding claims,
wherein the motion sensor (1) is one of a strain sensor, an acoustic emission sensor, an acceleration sensor and a gyroscope.

10. Sensor module (10) according to any of the preceding claims 1 to 7, wherein the motion sensor (1) is a strain sensor comprising a substrate (11) and a strain sensing layer (12) of polycrystalline piezoelectric material supported by the substrate (11) and extending in a plane in parallel to a plane (x,y) of the substrate (11), arranged between a top electrode (13) and a bottom electrode (14), each extending in parallel to the plane (x,y) of the substrate (11), of a thickness of less than or equal to 2 µm perpendicular to its plane extension, linked with the substrate (11) to have strain (ST) in the plane (x,y) of the substrate (11) couple into the strain sensing layer (12) as in-plane strain, wherein the polycrystalline piezoelectric material is configured to convert the in-plane strain (ST) in the strain sensing layer (12) into an electric field (EF) perpendicular to the plane of the strain sensing layer (12), resulting in a difference of potential between the top electrode (13) and the bottom electrode (14) representing a strain signal.

11. Sensor module arrangement, comprising
a component (100), and
a sensor module (10) according to any of the preceding claims for measuring in-plane strain (ST) of the component (100),
preferably wherein the sensor module (10) is attached to the component (100) to join in a displacement or a deformation of the component (1000) in a perpendicular direction (z) without being compressed in the perpendicular direction (z),
preferably wherein the component (100) is the component (100) of one of a machine, a tool, a production site, an infrastructure, an engine, a pump, a turbine, a bearing, a housing, a container, a building, a gear, a transportation means, a vehicle, a heater, a burner and a boiler.

12. Method for manufacturing sensor modules (10), in particular sensor modules (10) of any of the preceding claims 1 to 10,
providing a set of x motion sensors (1) for manufacturing y sensor modules (10) from, with y ≥ 2 and x ≥ y,
providing a continuous metal core printed circuit board (2,3,4) of a size to manufacture at least y sensor modules (10) from, the metal core printed circuit board (2,3,4) comprising a printed circuit board (2) supported by a core (3), and wiring (Wᵢ) for each of the y sensor modules (10) to be manufactured, each wiring (Wᵢ) residing in a module area (MAᵢ) representing an area of the metal core printed circuit board (2,3,4) assigned to one sensor module (10),
comprising further steps of:
a) partly separating adjacent module areas (MAᵢ) from each other leaving one or more bridges (Bᵢ) between adjacent module areas (MAᵢ) in one or more of the printed circuit board (2) and the core (3),
b) arranging on and electrically connecting the x motion sensors (1) to the printed circuit board (2), and
c) fully separating adjacent module areas (MAᵢ) from each other thereby generating separated sensor modules (10).

13. Method for manufacturing a sensor module according to claim 12,
wherein step b) includes SMD mounting of the motion sensors (1) on die pads (DPᵢ) of the printed circuit board (2), the printed circuit board (2) comprising at least one die pad (DPᵢ) per module area (MAᵢ),
preferably wherein step b) includes SMD mounting of the motion sensors (1) on the die pads (DPᵢ) of the printed circuit board (2) simultaneously,
preferably wherein step b) includes SMD mounting of the motion sensors (1) and additional electrical components (4) on the first side (2f) of the printed circuit board (2),
preferably wherein step b) includes SMD mounting of the motion sensors (1) and additional electrical components (4) on the first side (2f) of the printed circuit board (2) simultaneously.

14. Method for manufacturing a sensor module according to claim 12 or claim 13, comprising
after the mounting step b) and before the fully separating step c), electrically testing and / or calibrating the sensor modules (10), preferably electrically testing and / or calibrating the sensor modules (10) simultaneously.

15. Method for manufacturing a sensor module according to claim 14, comprising
wherein the bridges (Bᵢ) manufactured in step b) include printed circuit board material, and
wherein at least one of the bridges (Bᵢ) manufactured between adjacent sensor module areas (MAᵢ) include at least one bridge wire (BWᵢ) connecting the wirings (Wᵢ) of the adjacent sensor modules (10),
wherein in the testing and / or calibrating step, the at least one bridge wire (BWᵢ) between adjacent motion sensor areas (MAᵢ) is used to electrically connect the adjacent sensor modules (10) for testing and / or calibrating purposes.
